# EUROPEAN PATENT APPLICATION

(11) **EP 4 606 613 A1**
(43) Date of publication of application: **27.08.2025**
(21) Application number: 23879468.9
(22) Date of filing: 28.08.2023
(51) Int. Cl.: B60K 6/40, B60K 6/36, B60K 6/383, B60K 6/387, B60K 6/48

(54) **POWER TRANSMISSION UNIT AND POWER SYSTEM**

(30) Priority: 18.10.2022 JP 2022166663
(71) Applicant: Okamura Corporation, Yokohama-shi, Kanagawa 220-0004 (JP); Kubota Corporation, Osaka-shi, Osaka 556-8601 (JP)
(72) Inventor: MORITA Takuya, Yokohama-shi, Kanagawa 220-0004 (JP); OKUDA Mitsugu, Sakai-shi, Osaka 592-8331 (JP)
(74) Representative: Ipsilon Lyon
(86) International application number: PCT/JP2023/030970
(87) International publication number: WO 2024/084816

(57) **Abstract**

What is provided is a power transmission unit and a power system according to one aspect of the present disclosure, including: an input shaft connected to a drive shaft of an internal combustion engine; an output shaft connected to a driven apparatus in a power transmittable manner; a transmission mechanism connecting the input shaft to the output shaft; and a motor generator including a rotary shaft connected to the input shaft and the output shaft via the transmission mechanism. When viewed in an axial direction of the input shaft, the motor generator is disposed outward from the input shaft in a radial direction crossing the axial direction.

## Description

### TECHNICAL FIELD

The present disclosure relates to a power transmission unit and a power system.

Priority is claimed on Japanese Patent Application No. 2022-166663, filed October 18, 2022, the contents of which are incorporated herein by reference.

### BACKGROUND ART

As a power system mounted in a hybrid vehicle, a configuration including an engine, a motor generator, and a hydraulic pump operated by a driving force (rotating force) of at least one of the engine and the motor generator is known.

For example, in the power system described in Patent Document 1 below, a one-way clutch is provided between an engine, a motor generator, and a hydraulic pump. According to this type of power system, when an input shaft connected to a drive shaft of the engine rotates in one direction, a driving force of the input shaft is transmitted to the hydraulic pump via the one-way clutch. A driving force from the hydraulic pump to the engine, which rotates the input shaft in the other direction, is blocked by the one-way clutch. For example, in the power system described in Patent Document 2 below, a drive shaft of an engine and a rotary shaft of a motor generator are disposed coaxially via a one-way clutch.

### Citation List

### Patent Document

Patent Document 1: Japanese Unexamined Patent Application, First Publication No. 2014-133455
Patent Document 2: Japanese Unexamined Patent Application, First Publication No. 2002-103999

### SUMMARY OF INVENTION

### Technical Problem

However, for example, in the configuration described in Patent Document 2, since the drive shaft of the engine and the rotary shaft of the motor generator are disposed coaxially, there is a problem of causing an increase in an axial size of the power system.

The present disclosure provides a power transmission unit and a power system in which an increase in size of an output shaft in an axial direction thereof can be minimized.

### Solution to Problem

In order to solve the above problems, the present disclosure adopts the following aspects.
(1) A power transmission unit according to one aspect of the present disclosure includes an input shaft connected to a drive shaft of an internal combustion engine, an output shaft connected to a driven apparatus in a transmittable manner, a transmission mechanism configured to connect the input shaft to the output shaft, and a motor generator including a rotary shaft connected to the input shaft and the output shaft via the transmission mechanism, wherein the transmission mechanism includes a relay mechanism configured to connect the rotary shaft to the output shaft, and a one-way clutch configured to transmit a driving force of the input shaft in one direction to the rotary shaft and the output shaft via the relay mechanism and disconnect a driving force between the relay mechanism and the input shaft, which is generated by the rotary shaft and the output shaft to rotate the input shaft in the other direction, and when viewed in an axial direction of the input shaft, the motor generator is disposed outward from the input shaft in a radial direction crossing the axial direction.

According to the present aspect, as compared to a configuration in which the motor generator is disposed alongside the internal combustion engine in the axial direction, an increase in size of a power system in the axial direction resulting from addition of the motor generator can be minimized. Thus, a hybrid power system can be mounted in an existing engine compartment without increasing a size of a space required for mounting a power system including only an engine in the axial direction. In this case, it is also possible to provide a hybrid power system by retrofitting an existing power system with the motor generator.

In addition, in the present aspect, the input shaft is connected to the output shaft and the rotary shaft by the one-way clutch that transmits the driving force of the input shaft in one direction to the rotary shaft and output shaft via the relay mechanism, and disconnects the driving force between the relay mechanism and the input shaft, which is generated by the rotary shaft and output shaft to rotate the input shaft in the other direction.

According to this configuration, connected and disconnected states between the input shaft, the output shaft, and the rotary shaft are switched depending on rotational states of the input shaft, the output shaft, and the rotary shaft. For that reason, unlike other clutches, no power is required to switch between the connected and disconnected states. Thus, energy loss can be kept to a minimum.

(2) In the power transmission unit according to the aspect (1), the input shaft and the output shaft may be disposed coaxially.

According to the present aspect, it becomes easier to secure a space for disposing the motor generator outward in the radial direction from the input shaft and the output shaft.

(3) The power transmission unit according to the above aspect (1) or (2) may further include a mechanism housing portion configured to house the transmission mechanism, wherein the one-way clutch may include an inner ring, an outer ring that surrounds the inner ring and is connected to the output shaft, and an intermediate member that connects the inner ring to the outer ring in accordance with rotation of the inner ring in one direction to integrally rotate the inner ring and the outer ring and releases the connection between the inner ring and the outer ring in accordance with rotation of the outer ring in the other direction to rotate the outer ring and the inner ring relative to each other, the input shaft may be rotatably supported in the mechanism housing portion at a middle portion in the axial direction, and the input shaft may be connected to the drive shaft outside the mechanism housing portion, while being connected to the inner ring inside the mechanism housing portion.

According to the present aspect, the input shaft can be made more compact in the axial direction than in a configuration in which both end portions of the input shaft are supported by bearings.

(4) **In** the power transmission unit according to the above aspect (3), the relay mechanism may include a first gear fixed to the outer ring and a second gear disposed between the first gear and the rotary shaft.

According to the present aspect, the relay mechanism with excellent power transmission reliability and durability can be provided.

(5) **In** the power transmission unit according to the above aspect (4), the first gear may be fixed to a first side in the axial direction relative to the outer ring, and the output shaft may be fixed to a second side in the axial direction relative to the outer ring.

According to the present aspect, power transmission can be performed between the outer ring, the motor generator, and the driven apparatus while curbing complexity of the configuration.

(6) The power transmission unit according to any of the above aspects (1) to (5) may further include a mechanism housing portion configured to house the transmission mechanism, wherein the motor generator may be disposed outward in the radial direction from the mechanism housing portion.

According to the present aspect, overlap of the mechanism housing portion with the motor generator when viewed in the axial direction can be minimized. As a result, an increase in size of the power transmission unit in the axial direction can be reliably minimized.

(7) A power system according to the present aspect includes the power transmission unit according to any one of the above aspects (1) to (6), the internal combustion engine including the drive shaft to which the input shaft is connected, and the driven apparatus including a driven shaft to which the output shaft is connected.

According to the present aspect, a hybrid power system that is made compact in the axial direction can be provided.

### Advantageous Effects of Invention

According to each of the above aspects, it is possible to provide the power transmission unit and the power system in which an increase in size of the output shaft in the axial direction can be minimized.

### BRIEF DESCRIPTION OF DRAWINGS

[FIG. 1] A perspective view of a power system according to an embodiment.
[FIG. 2] A cross-sectional view of the power system according to the embodiment.
[FIG. 3] A rear view of the power system according to the embodiment.
[FIG. 4] A front view of a one-way clutch according to the embodiment.
[FIG. 5] A cross-sectional view showing a coupling portion between a motor housing and a case according to the embodiment.
[FIG. 6] A configuration diagram of the power system for illustrating a first connected operation mode of the one-way clutch.
[FIG. 7] A configuration diagram of the power system for illustrating a second connected operation mode of the one-way clutch.
[FIG. 8] A configuration diagram of the power system for illustrating a third connected operation mode of the one-way clutch.
[FIG. 9] A configuration diagram of the power system for illustrating a first disconnected operation mode of the one-way clutch.
[FIG. 10] A configuration diagram of the power system for illustrating a second disconnected operation mode of the one-way clutch.

### DESCRIPTION OF EMBODIMENTS

Next, an embodiment of the present disclosure will be described on the basis of the drawings. In the embodiment and modified examples described below, the same reference numerals may be used to denote corresponding configurations, and their description may be omitted. In the following description, for example, expressions indicating relative or absolute arrangements, such as "parallel," "orthogonal," "center," and "coaxial," do not only strictly indicate such arrangements, but also indicate a state in which two surfaces are relatively displaced with an angle or distance that provides a tolerance or the same function. In the present embodiment, "facing" does not only indicate a case in which orthogonal directions (normal directions) to two surfaces coincide with each other, but also includes a case in which the orthogonal directions intersect each other.

### [Power System 1]

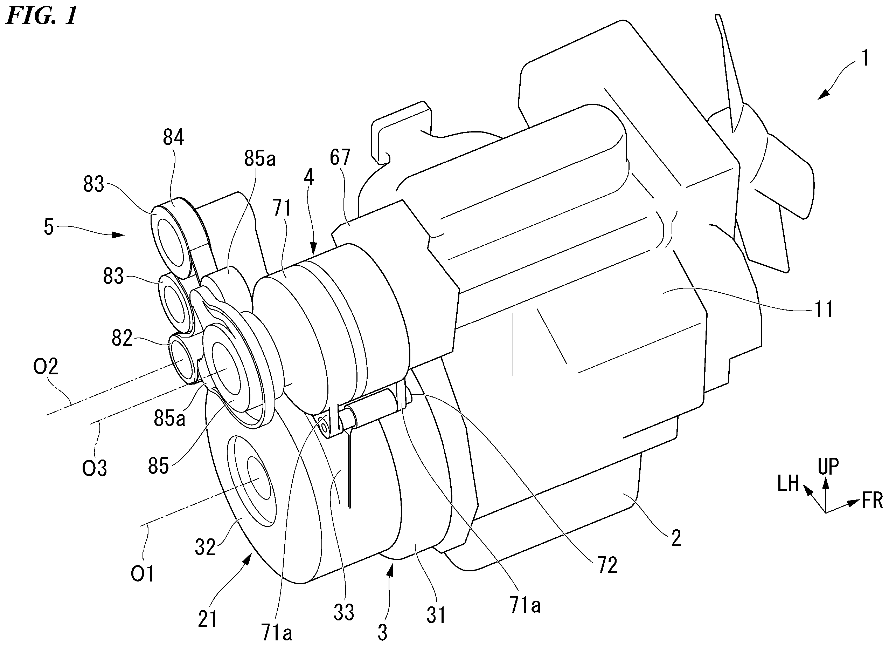

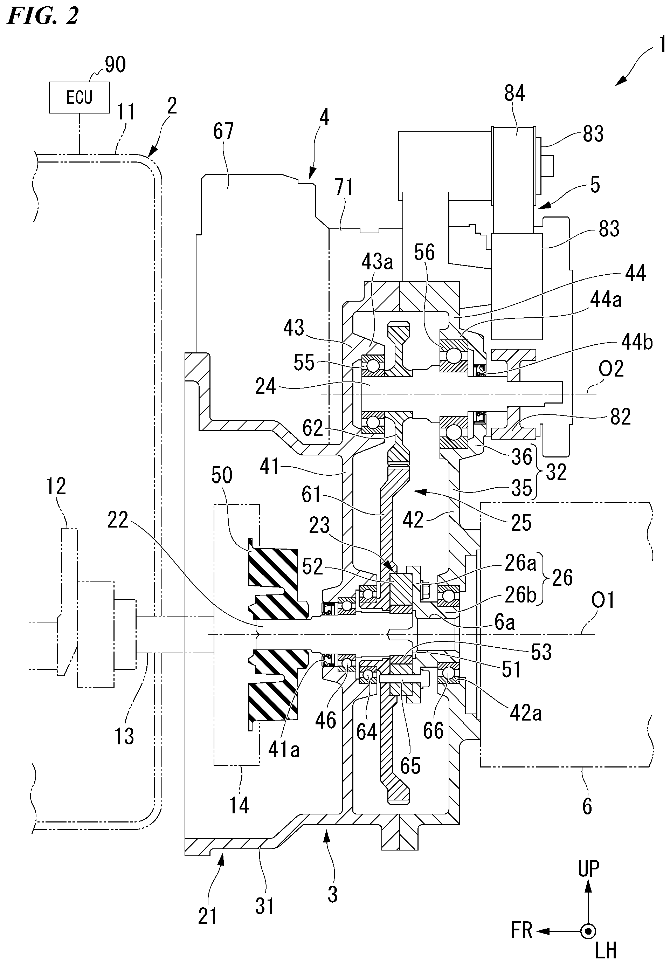

FIG. 1 is a perspective view of a power system 1. FIG. 2 is a cross-sectional view of the power system 1.

The power system 1 shown in FIGS. 1 and 2 is a hybrid power system mounted on a vehicle (for example, a special vehicle such as a construction machine such as a hydraulic excavator or aerial work platform, or an industrial machine such as a forklift). The power system 1 includes an engine (internal combustion engine) 2, a first transmission mechanism (transmission mechanism) 3, a motor generator 4, a second transmission mechanism 5, and a hydraulic pump 6. In the following description, forward, rearward, upward, downward, leftward, and rightward are the same as directions of the vehicle. In this case, "UP" in the figures indicates upward, FR in the figures indicates forward, and LH in the figures indicates leftward. A power transmission unit of the present embodiment is configured by the first transmission mechanism 3, the motor generator 4, and the second transmission mechanism 5.

The first transmission mechanism 3 and the motor generator 4 are arranged in the vertical direction. The engine 2, the first transmission mechanism 3, and the hydraulic pump 6 are arranged in the longitudinal direction. The power system 1 is mounted in an engine compartment of the vehicle with the engine 2 facing forward (the hydraulic pump 6 facing rearward).

### <Engine 2>

The engine 2 functions as a first drive source. The engine 2 is, for example, an in-line four-cylinder internal combustion engine. The engine 2 houses a crankshaft 12 (see FIG. 2) in a crankcase 11. As shown in FIG. 2, the engine 2 has, for example, a protruding shaft (drive shaft) 13 coaxial with the crankshaft 12 protruding out of the crankcase 11. The protruding shaft 13 rotates in one direction as the engine 2 operates. A flywheel 14 is coupled to the protruding shaft 13. The flywheel 14 is formed in a disk shape and disposed coaxially with the protruding shaft 13.

### <First transmission mechanism 3>

As shown in FIG. 2, the first transmission mechanism 3 transmits a driving force from at least one drive source of the engine 2 and the motor generator 4 to the hydraulic pump 6, or transmits a driving force of the hydraulic pump 6 to the motor generator 4.

The first transmission mechanism 3 includes a case 21, an input shaft 22, a one-way clutch 23, a transmission shaft 24, a relay mechanism 25, and an output shaft 26. In the following description, a direction along a first axis O1 of the input shaft 22 may be referred to as an axial direction, a direction crossing the first axis O1 when viewed in the axial direction may be referred to as a radial direction, and a direction going around the first axis O1 may be referred to as a circumferential direction. In the present embodiment, the axial direction coincides with the longitudinal direction.

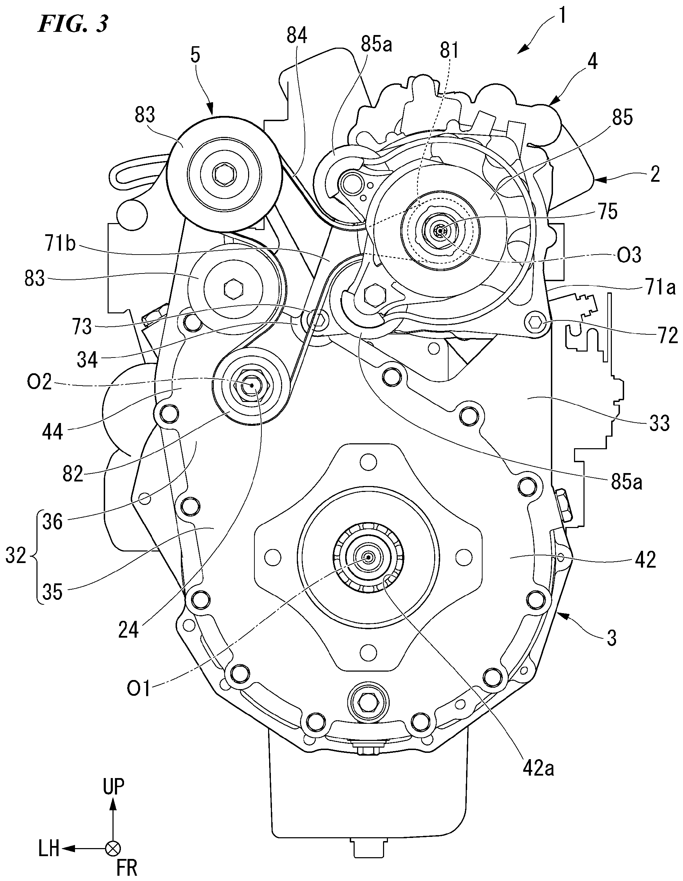

FIG. 3 is a rear view of the power system 1.

As shown in FIGS. 2 and 3, the case 21 includes a wheel housing portion 31 (see FIG. 2), a mechanism housing portion 32, a first support piece 33, and a second support piece 34.

The wheel housing portion 31 forms a front part (a first side in the axial direction) of the case 21. The wheel housing portion 31 is formed in a bottomed cylindrical shape that opens forward. The flywheel 14 is housed in the wheel housing portion 31.

The mechanism housing portion 32 is located behind the wheel housing portion 31 (on a second side in the axial direction) and configured integrally with the wheel housing portion 31. The mechanism housing portion 32 is larger than the wheel housing portion 31 when viewed in the longitudinal direction. Specifically, the mechanism housing portion 32 includes a clutch housing portion 35 and an overhang housing portion 36. The clutch housing portion 35 and the overhang housing portion 36 form an integrated space.

As shown in FIG. 2, the clutch housing portion 35 overlaps the wheel housing portion 31 when viewed in the longitudinal direction. In the case 21, a first communication hole 41a is formed in a partition wall 41 that separates the clutch housing portion 35 from the wheel housing portion 31. The first communication hole 41a penetrates in the longitudinal direction through a portion of the partition wall 41 that is located coaxially with the first axis O1. A second communication hole 42a is formed in a wall portion (hereinafter referred to as an opposing wall 42) of the clutch housing portion 35 that faces the partition wall 41 in the longitudinal direction. The second communication hole 42a penetrates in the longitudinal direction through a portion of the opposing wall 42 that is located coaxially with the first axis O1.

The overhang housing portion 36 overhangs upward (outward in the radial direction) from the clutch housing portion 35. In the example of FIG. 3, the overhang housing portion 36 overhangs diagonally upward to the left when viewed in the longitudinal direction. As shown in FIG. 2, the overhang housing portion 36 includes wall portions (a first wall portion 43 and a second wall portion 44) that face each other in the longitudinal direction. A bearing housing 43a is formed in the first wall portion 43. A bearing housing 44a is formed in the second wall portion 44. A through hole 44b is formed in a portion of the second wall portion 44 that is located inward from the bearing housing 44a. The through hole 44b penetrates the second wall portion 44 in the longitudinal direction.

As shown in FIG. 3, the first support piece 33 protrudes upward from a portion of the clutch housing portion 35 that is located rightward from the overhang housing portion 36.

The second support piece 34 protrudes upward from the overhang housing portion 36. Tip portions of the first support piece 33 and the second support piece 34 are located at the same height in the vertical direction.

As shown in FIG. 2, the input shaft 22 passes through the first communication hole 41a in the longitudinal direction. Specifically, the input shaft 22 extends in the longitudinal direction coaxially with the first axis O1. A central portion of the input shaft 22 in the longitudinal direction is rotatably supported by the partition wall 41 via a bearing 46 provided in the first communication hole 41a. A front end portion (first side end portion in the axial direction) of the input shaft 22 protrudes into the wheel housing portion 31. A damper 50 is provided at the front end portion of the input shaft 22. The damper 50 is made of an elastically deformable material (for example, rubber, or the like). The damper 50 is a disk-shaped member. The flywheel 14 is fixed to the damper 50 in a state in which they overlap each other in the longitudinal direction. A rear end portion (second side end portion in the axial direction) of the input shaft 22 protrudes into the clutch housing portion 35.

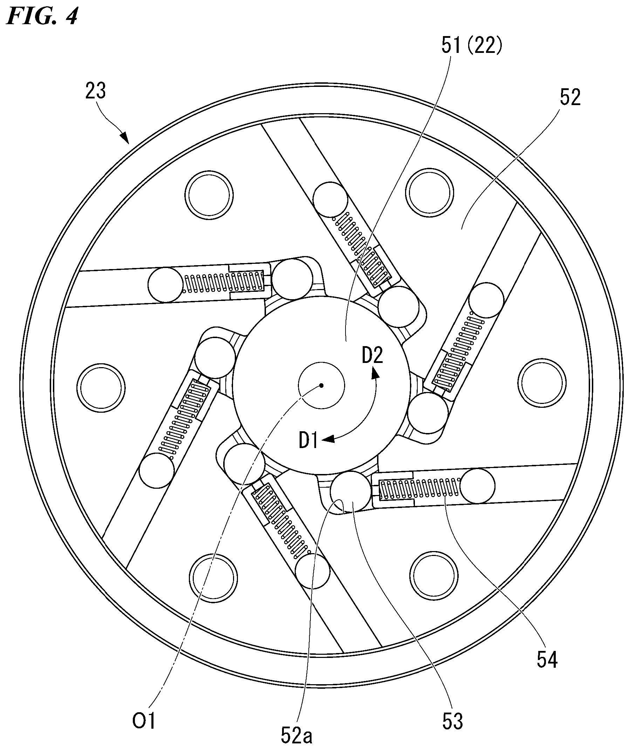

FIG. 4 is a front view of the one-way clutch 23.

As shown in FIGS. 2 and 4, the one-way clutch 23 transmits rotation of the input shaft 22 in one direction to the hydraulic pump 6. The one-way clutch 23 restricts the input shaft 22 from rotating in the other direction by the driving force of the hydraulic pump 6 or the motor generator 4. The one-way clutch 23 is, for example, of a cam type. The one-way clutch 23 includes an inner ring 51, an outer ring 52, and a roller (intermediate member) 53.

The inner ring 51 is located at the rear end portion of the input shaft 22.

The outer ring 52 is disposed to surround the inner ring 51.

The roller 53 is configured to be movable between a connected state in which the inner ring 51 and the outer ring 52 are connected to each other, and a disconnected state in which the connection between the inner ring 51 and the outer ring 52 is released. A plurality of rollers 53 are provided at intervals in the circumferential direction. For example, each roller 53 is held to be movable separately within a plurality of cam grooves 52a provided in the outer ring 52. Distances between surfaces of the cam grooves 52a facing inward in the radial direction (hereinafter referred to as cam surfaces) and an outer circumferential surface of the inner ring 51 become shorter toward a first side D1 in the circumferential direction. The rollers 53 are biased toward a second side D2 in the circumferential direction by biasing members 54.

In the one-way clutch 23, when the inner ring 51 rotates in one direction, the rollers 53 move within the cam grooves 52a toward the first side D1 in the circumferential direction due to friction with the inner ring 51. Thus, the rollers 53 are sandwiched between the inner ring 51 and the outer ring 52 (cam surface), and the inner ring 51 and the outer ring 52 are connected to each other via the rollers 53 (connected state). In the connected state, the inner ring 51 and the outer ring 52 can rotate together in one direction. In the one-way clutch 23, when the outer ring 52 rotates in one direction, the rollers 53 move in the cam grooves 52a to the second side D2 in the circumferential direction. Thus, the rollers 53 have plays between the inner ring 51 and the outer ring 52 (cam surfaces). That is, rotation of the outer ring 52 is no longer transmitted via the rollers 53, and the outer ring 52 rotates relative to the inner ring 51 (disconnected state). The rollers 53 may be held by the inner ring 51.

As shown in FIG. 2, the transmission shaft 24 is rotatably supported in the overhang housing portion 36 around a second axis O2 parallel to the first axis O1. Specifically, a front end portion of the transmission shaft 24 is rotatably supported via a bearing 55 provided in the bearing housing 43a. An intermediate portion of the transmission shaft 24 in the longitudinal direction is rotatably supported via a bearing 56 provided in the bearing housing 44a. A rear end portion of the transmission shaft 24 protrudes to the outside of the overhang housing portion 36 through the through hole 44b.

The relay mechanism 25 relays a driving force between the input shaft 22 and the transmission shaft 24. The relay mechanism 25 includes a first gear 61 and a second gear 62.

The first gear 61 is disposed coaxially with the first axis O1 in the clutch housing portion 35. The first gear 61 is fixed to the outer ring 52 of the one-way clutch 23. Specifically, the first gear 61 is fixed to the outer ring 52 while overlapping the outer ring 52 from the front. The first gear 61 can rotate integrally with the outer ring 52. The first gear 61 is rotatably supported by the partition wall 41 via a bearing 64 provided in the first communication hole 41a.

The second gear 62 is disposed coaxially with the second axis O2 in the overhang housing portion 36. The second gear 62 is fixed to the transmission shaft 24. The second gear 62 engages with the first gear 61.

The output shaft 26 is disposed rearward from the one-way clutch 23 in the clutch housing portion 35. Specifically, the output shaft 26 includes a flange portion 26a and a shaft portion 26b.

The flange portion 26a is fixed to the outer ring 52 in a state where it overlaps the outer ring 52 from the rear. The first gear 61 and the flange portion 26a sandwich the outer ring 52 from both the front and the rear. The first gear 61 and the flange portion 26a are coupled with each other by screws 65. The screws 65 penetrate the outer ring 52 in the longitudinal direction.

The shaft portion 26b protrudes forward from the flange portion 26a. The shaft portion 26b is formed in a hollow shape extending coaxially with the first axis O1. A rear end portion of the shaft portion 26b is rotatably supported by the opposing wall 42 via a bearing 66 provided in the second communication hole 42a.

### <Motor generator 4>

As shown in FIGS. 1 and 3, the motor generator 4 is connected to an on-board power source (secondary battery) via an inverter 67. The motor generator 4 functions as a second drive source (electric motor) that generates a driving force in accordance with power supply from the on-board power source. The motor generator 4 functions as a generator that generates electric power in accordance with power transmission from the engine 2. For example, the electric power generated by the motor generator 4 is charged to the on-board power source. The electric power exchanged between the motor generator 4 and the on-board power supply is adjusted by the inverter 67.

As shown in FIG. 3, the motor generator 4 is provided at a position at which it does not overlap the first axis O1 when viewed in the longitudinal direction. Specifically, the motor generator 4 is disposed above the clutch housing portion 35 and at a portion located rightward from the overhang housing portion 36 while it protrudes above the overhang housing portion 36. That is, the motor generator 4 is disposed outward in the radial direction from the mechanism housing portion 32. In this case, at least a portion of the motor generator 4 overlaps the engine 2 when viewed in the longitudinal direction. The entire motor generator 4 preferably overlaps the engine 2.

As shown in FIG. 2, at least a portion of the motor generator 4 is disposed within a width of the case 21 in the longitudinal direction. Specifically, as shown in FIGS. 1 to 3, at least a portion of the motor generator 4 overlaps the wheel housing portion 31 and the clutch housing portion 35 when viewed in the vertical direction. At least a portion of the motor generator 4 overlaps the overhang housing portion 36 when viewed in the lateral direction. The entire motor generator 4 is preferably disposed within the width of the case 21 in the longitudinal direction.

The motor generator 4 includes a motor housing 71 and a motor body (not shown) housed in the motor housing 71.

The motor housing 71 is formed in a cylindrical shape extending in the longitudinal direction. As shown in FIG. 3, a first attachment piece 71a and a second attachment piece 71b that protrude downward are formed in the motor housing 71.

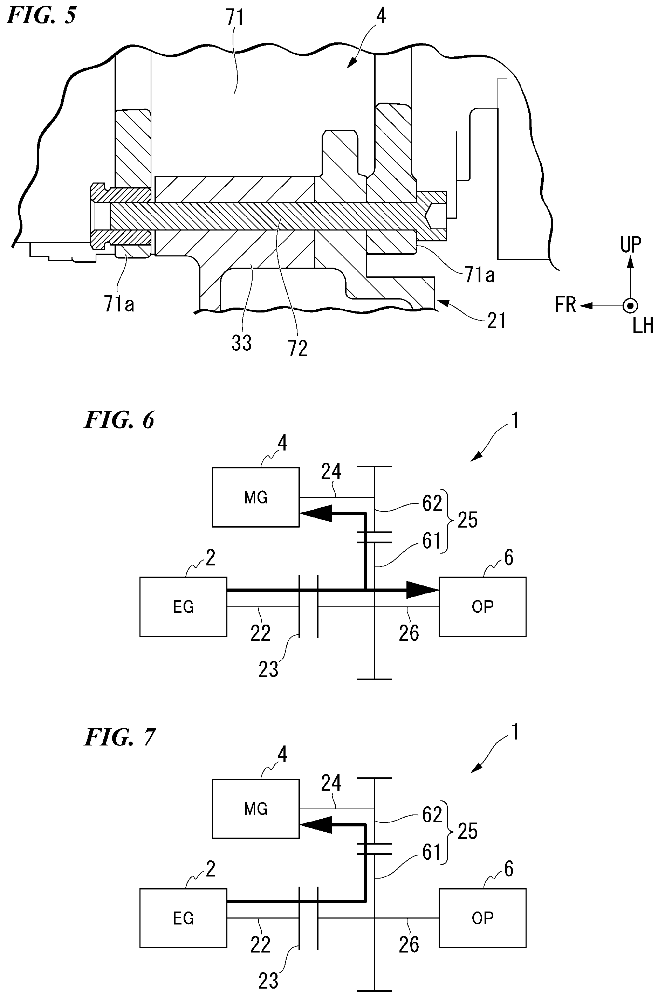

FIG. 5 is a cross-sectional view showing a coupling portion between the motor housing 71 (first attachment piece 71a) and the case 21 (support piece 33).

As shown in FIGS. 3 and 5, the first attachment piece 71a extends downward from a portion of the motor housing 71 located on the right side. The first attachment piece 71a is configured of a pair of opposing pieces that face each other in the longitudinal direction. The first attachment piece 71a is disposed so that the pair of opposing pieces sandwich the first support piece 33 from both sides in the longitudinal direction. The first attachment piece 71a and the first support piece 33 are fastened to each other in the axial direction by fastening members 72 (for example, bolts and nuts).

The second attachment piece 71b extends downward from a portion of the motor housing 71 located on the left side. The second attachment piece 71b is configured of a pair of opposing pieces that face each other in the longitudinal direction, similarly to the first attachment piece 71a. The second attachment piece 71b is disposed so that the pair of opposing pieces sandwich the second support piece 34 from both sides in the longitudinal direction. The second attachment piece 71b and the second support piece 34 are fastened to each other in the longitudinal direction by fastening members 73 (for example, bolts and nuts).

The motor body is housed within the motor housing 71 with an axis of a rotary shaft 75 (hereinafter referred to as a third axis O3) disposed parallel to the first axis O1. The rotary shaft 75 protrudes rearward from the motor housing 71.

### <Second transmission mechanism 5>

As shown in FIGS. 1 and 3, the second transmission mechanism 5 transmits a driving force between the motor generator 4 and the transmission shaft 24. The second transmission mechanism 5 includes a first driving pulley 81, a second driving pulley 82, a plurality of driven pulleys 83, a belt 84, and a tensioner 85.

The first driving pulley 81 is fixed to a rear end portion of the rotary shaft 75. The first driving pulley 81 rotates together with the rotary shaft 75 around the third axis O3.

The second driving pulley 82 is fixed to the rear end portion of the transmission shaft 24. The second driving pulley 82 rotates together with the transmission shaft 24 around the second axis O2.

The plurality of driven pulleys 83 are arranged in the vertical direction on the left side of the motor generator 4 and above the second driving pulley 82. Each of the driven pulleys 83 is rotatably supported by the case 21 around an axis extending in the longitudinal direction.

The belt 84 is wound around the respective pulleys 81 to 83. The belt 84 runs between the respective pulleys 81 to 83 as one of the driving pulleys 81 and 82 rotates with rotation of the rotary shaft 75 or the transmission shaft 24. Thus, a driving force of one of the rotary shaft 75 and the transmission shaft 24 is transmitted to the other shaft.

The tensioner 85 includes a pair of tension rollers 85a that face each other with the belt 84 interposed therebetween. The tension rollers 85a are configured to be movable around the third axis O3 in a direction in which they come closer to each other or separate from each other. The tensioner 85 adjusts tension of the belt 84 in accordance with movements of the tension rollers 85a.

### <Hydraulic Pump 6>

As shown in FIG. 2, the hydraulic pump 6 generates a hydraulic pressure on the basis of the driving force input from at least one drive source of the engine 2 and the motor generator 4. The hydraulic pump 6 is connected to a hydraulic actuator (driven apparatus) mounted on the vehicle. The hydraulic pressure generated by the hydraulic pump 6 is supplied to various hydraulic actuators. The hydraulic pump 6 is attached to a rear side of the case 21. A rotary shaft (driven shaft) 6a of the hydraulic pump 6 is fixed to the output shaft 26 through the second communication hole 42a. Thus, the hydraulic pump 6 is connected to the output shaft 26 in a power transmittable manner. In the present embodiment, examples of the hydraulic actuators include a hydraulic cylinder and a hydraulic motor.

The power system 1 includes a control unit 90 as an electronic control unit (ECU). The control unit 90 includes a calculation processing circuit that performs various calculation processes relating to driving of the engine 2 or the like, and a storage apparatus in which control programs and data are stored. Various detection signals are input to the control unit 90. The detection signals include a rotation speed of the engine 2 (for example, a rotation speed of a crankshaft), various temperatures of the engine 2, an accelerator operation amount (output demand amount), vehicle conditions such as a vehicle speed, an amount of electricity stored in the on-board power supply, and the like. The control unit 90 controls operations of the power system 1 on the basis of the detection signals. The operation control includes control of operating the engine 2, control of power running or regeneration (power generation) of the motor generator 4, and the like.

Next, various operation modes of the power system 1 of the present embodiment will be described. The power system 1 switches between enabling and disabling power transmission between the engine 2 and the hydraulic pump 6 and between the engine 2 and the motor generator 4 by connecting and disconnecting the one-way clutch 23. When the one-way clutch 23 is in the connected state, the power transmission is enabled between the engine 2 and the hydraulic pump 6 and between the engine 2 and the motor generator 4. When the one-way clutch 23 is in the disconnected state, the power transmission is disabled between the engine 2 and the hydraulic pump 6, and between the engine 2 and the motor generator 4.

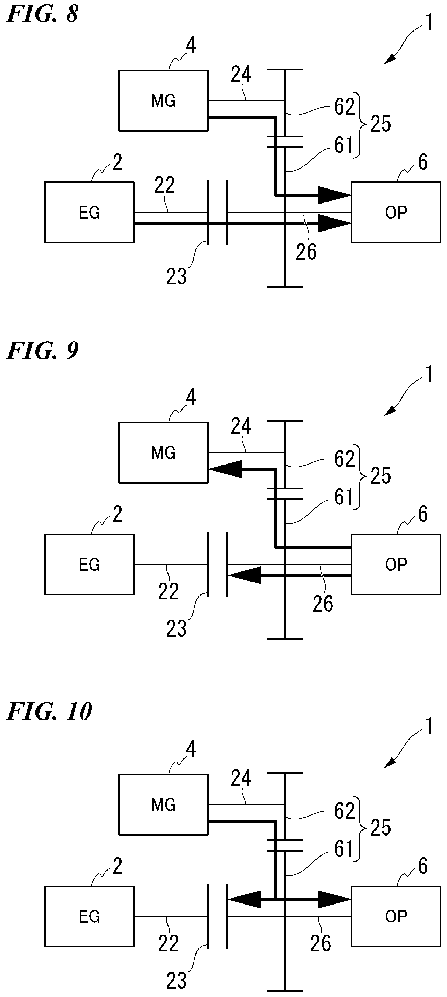

FIGS. 6 to 8 are configuration diagrams of the power system 1 for illustrating the various operation modes when the one-way clutch 23 is in the connected state. FIGS. 9 and 10 are configuration diagrams of the power system 1 for illustrating the various operation modes when the one-way clutch 23 is in the disconnected state.

When the one-way clutch 23 is in the connected state, the power system 1 can operate in a first connected operation mode, a second connected operation mode, and a third connected operation mode. When the one-way clutch 23 is in the disconnected state, the power system 1 can operate in a first disconnected operation mode and a second disconnected operation mode.

The first connected operation mode shown in FIG. 6 is a mode in which the hydraulic pump 6 and the motor generator 4 are driven by the engine 2. Specifically, driving of the engine 2 rotates the input shaft 22 in one direction, and thus the one-way clutch 23 (the inner ring 51 and the outer ring 52) enters the connected state. When the one-way clutch 23 enters the connected state, the output shaft 26 rotates with the rotation of the input shaft 22. This drives the hydraulic pump 6, and the hydraulic pressure can be supplied to the hydraulic actuators. When the one-way clutch 23 enters the connected state, the first gear 61 rotates with the rotation of the input shaft 22. Then, a driving force of the first gear 61 is transmitted to the second gear 62, causing the transmission shaft 24 to rotate. Thus, the second driving pulley 82 rotates, whereby the driving force of the input shaft 22 is transmitted to the motor generator 4 via the second transmission mechanism 5. Thus, the motor generator 4 rotates, and electric power is generated by the motor generator 4. The electric power generated by the motor generator 4 is charged to the on-board power supply via the inverter 67.

The second connected operation mode shown in FIG. 7 is a mode in which only the motor generator 4 is driven by the engine 2. In the second connected operation mode, similarly to the first connected operation mode, the driving force of the input shaft 22 is transmitted to the motor generator 4 via the relay mechanism 25 and the second transmission mechanism 5, and the electric power is generated by the motor generator 4. In the second connected operation mode, the supply of hydraulic pressure is blocked between the hydraulic pump 6 and the hydraulic actuators. Accordingly, even if the output shaft 26 rotates due to the rotation of the input shaft 22, the hydraulic pressure is not supplied to the hydraulic actuators.

The third connected operation mode shown in FIG. 8 is a mode in which the hydraulic pump 6 is driven by the engine 2 and the motor generator 4. When the engine 2 and the motor generator 4 are driven while a rotation speed of the engine 2 (input shaft 22) is set to be higher than a rotation speed of the motor generator 4 (rotary shaft 75), the inner ring 51 begins to rotate in one direction relative to the outer ring 52. For that reason, the one-way clutch 23 is in the connected state. In this state, the driving force of the input shaft 22 is transmitted to the output shaft 26 via the one-way clutch 23. The driving force of the motor generator 4 is transmitted to the output shaft 26 via the second transmission mechanism 5 and the relay mechanism 25. As a result, the hydraulic pump 6 operates due to the driving forces of the engine 2 and the motor generator 4.

The first disconnected operation mode shown in FIG. 9 is a mode in which the hydraulic pump 6 operates by inertia, such as when the vehicle is traveling on a slope. In this case, when the output shaft 26 rotates in one direction, the outer ring 52 rotates in one direction together with the first gear 61. Thus, the driving force of the output shaft 26 is transmitted to the motor generator 4 via the relay mechanism 25 and the second transmission mechanism 5, and the electric power is generated by the motor generator 4. The outer ring 52 rotates in one direction, and thus the outer ring 52 and the inner ring 51 maintain the disconnected state. Thus, the outer ring 52 and the inner ring 51 rotate relative to each other, and thus the rotation of the output shaft 26 restricts the rotation of the input shaft 22 in the other direction.

The second disconnected operation mode shown in FIG. 10 is a mode in which the hydraulic pump 6 is driven only by the motor generator 4. When only the motor generator 4 is driven while the engine 2 is stopped, the outer ring 52 rotates in one direction via the second transmission mechanism 5 and the relay mechanism 25. When the outer ring 52 rotates in one direction, the one-way clutch 23 maintains the disconnected state. For that reason, only the output shaft 26 rotates with the rotation of the outer ring 52. That is, while the rotation of the input shaft 22 in the other direction is restricted, the hydraulic pump 6 operates with the rotation of the output shaft 26.

In this way, the power transmission unit of the present embodiment has the configuration in which the motor generator 4 is disposed outward in the radial direction from the input shaft 22 when viewed in the axial direction.

According to this configuration, as compared to a configuration in which the motor generator 4 is disposed alongside the engine 2 in the axial direction, an increase in size of the power system 1 in the axial (longitudinal) direction due to addition of the motor generator 4 can be inhibited. Thus, the hybrid power system 1 can be mounted in an existing engine compartment without increasing a size of a space required for mounting a power system having only an engine in the longitudinal direction. **In** this case, it is also possible to provide the hybrid power system 1 by retrofitting the motor generator 4 to an existing power system.

**In** addition, the present embodiment has the configuration in which the input shaft 22 is connected to the output shaft 26 and the rotary shaft 75 by the one-way clutch 23 that transmits the driving force of the input shaft 22 in one direction to the rotary shaft 75 and the output shaft 26 via the relay mechanism 25 and that disconnects the driving force between the relay mechanism 25 and the input shaft 22, which is generated by the rotary shaft 75 and the output shaft 26 and rotates the input shaft 22 in the other direction.

According to this configuration, the connected and disconnected states between the input shaft 22, the output shaft 26, and the rotary shaft 75 can be switched depending on the rotational state of the input shaft 22, the output shaft 26, and the rotary shaft 75. For that reason, unlike other clutches, no power is required to switch the connected and disconnected states. Thus, energy loss can be kept to a minimum.

The power transmission unit of the present embodiment has the configuration in which the input shaft 22 and the output shaft 26 are disposed coaxially.

According to this configuration, it becomes easier to secure a space for disposing the motor generator 4 outward in the radial direction from the input shaft 22 and the output shaft 26.

The power transmission unit of the present embodiment has the configuration in which the input shaft 22 is connected to the engine 2 outside the mechanism housing portion 32, while being connected to the inner ring 51 inside the mechanism housing portion 32.

According to this configuration, as compared to a configuration in which both end portions of the input shaft 22 are supported by bearings, the input shaft 22 can be made more compact in the axial direction.

The power transmission unit of the present embodiment has the configuration in which the one-way clutch 23 and the rotary shaft 75 are connected to each other by the gears 61 and 62.

According to this configuration, it is possible to provide the relay mechanism 25 with excellent power transmission reliability and durability. In the power transmission unit of the present embodiment, since the relay mechanism 25 and the one-way clutch 23 are housed together in the mechanism housing portion 32, the relay mechanism 25 and the one-way clutch 23 can be lubricated together.

The power transmission unit of the present embodiment has the configuration in which the first gear 61 is fixed to the first side (front) in the axial direction with respect to the outer ring 52, and the output shaft 26 is fixed to the second side (rear) in the axial direction with respect to the outer ring 52.

According to this configuration, power transmission can be performed between the outer ring 52, the motor generator 4, and the hydraulic pump 6 while curbing complexity of the configuration.

The power transmission unit of the present embodiment has the configuration in which the motor generator 4 is disposed outward in the radial direction from the mechanism housing portion 32.

According to this configuration, overlap of the mechanism housing portion 32 with the motor generator 4 when viewed in the axial direction can be minimized, and an increase in size of the power transmission unit in the axial direction can be reliably minimized.

Since the power system 1 of the present embodiment includes the power transmission unit described above, the hybrid power system 1 that is made compact in the axial direction can be provided.

### (Other modified examples)

Although preferred embodiments of the present disclosure have been described above, the present disclosure is not limited to these embodiments. Additions, omissions, substitutions, and other modifications of configurations are possible without departing from the spirit of the present disclosure. The present disclosure is not limited by the above description, but is limited only by the appended claims.

In the embodiments described above, a configuration in which the input shaft 22 and the output shaft 26 are disposed coaxially has been described, but the present disclosure is not limited to this configuration. The input shaft 22 and the output shaft 26 may be disposed with an offset in the radial direction.

In the embodiments described above, a case in which the power system 1 is mounted on the vehicle with its axial direction aligned with the longitudinal direction has been described as an example, but the present disclosure is not limited to this configuration. For example, the power system 1 may be mounted on the vehicle with its axial direction aligned with the lateral direction.

In the embodiments described above, a case in which the cam type one-way clutch 23 is used has been described, but the one-way clutch 23 is not limited to the cam type and may be a so-called sprag type or the like.

In the embodiments described above, a configuration in which the relay mechanism 25 includes the first gear 61 and one second gear 62 has been described, but the present disclosure is not limited to this configuration. The relay mechanism 25 may include a plurality of second gears 62 between the first gear 61 and the rotary shaft 75.

In the embodiments described above, a case in which the gears 61 and 62 are used for the relay mechanism 25 has been described, but the present disclosure is not limited to this configuration. The relay mechanism may be configured using a belt and pulleys, or the like. When a belt and pulleys are used, it becomes easy to set a reduction ratio between the input shaft 22 and the transmission shaft 24, and power transmission is easily performed even if the input shaft 22 and the transmission shaft 24 are far apart.

In the embodiments described above, a configuration in which the transmission shaft 24 is disposed between the input shaft 22 and the rotary shaft 75 has been described, but the present disclosure is not limited to this configuration. The input shaft 22 and the rotary shaft 75 may be directly connected to each other via the relay mechanism 25.

In the embodiments described above, a configuration in which the input shaft 22 is supported by the bearing 46 at one point has been described, but the present disclosure is not limited to this configuration. The input shaft 22 may be supported by the bearing at two points.

In the embodiments described above, a configuration in which the outer ring 52 is sandwiched between the first gear 61 and the output shaft 26 has been described, but the present disclosure is not limited to this configuration. The connection structure between the relay mechanism 25, the output shaft 26, and the one-way clutch 23 can be modified as appropriate.

In the embodiments described above, a configuration in which the motor generator 4 is disposed outward in the radial direction from the mechanism housing portion 32 has been described, but the present disclosure is not limited to this configuration. The motor generator 4 may be disposed outward in the radial direction from the input shaft 22.

Otherwise, the constituent elements in the above embodiments can be replaced with known constituent elements as appropriate without departing from the spirit of the present disclosure, and the respective modified examples described above may be combined as appropriate.

### REFERENCE SIGNS LIST

1 Power system
4 Motor generator
13 Protruding shaft
22 Input shaft
23 One-way clutch
25 Relay mechanism
26 Output shaft
32 Mechanism housing portion
51 Inner ring
52 Outer ring
61 First gear
62 Second gear
75 Rotary shaft

## Claims

1. A power transmission unit comprising:
an input shaft connected to a drive shaft of an internal combustion engine;
an output shaft connected to a driven apparatus in a power transmittable manner;
a transmission mechanism configured to connect the input shaft to the output shaft; and
a motor generator including a rotary shaft connected to the input shaft and the output shaft via the transmission mechanism,
wherein the transmission mechanism includes:
a relay mechanism configured to connect the rotary shaft to the output shaft; and
a one-way clutch configured to transmit a driving force of the input shaft in one direction to the rotary shaft and the output shaft via the relay mechanism and disconnect a driving force between the relay mechanism and the input shaft, which is generated by the rotary shaft and the output shaft to rotate the input shaft in the other direction, and
when viewed in an axial direction of the input shaft, the motor generator is disposed outward from the input shaft in a radial direction crossing the axial direction.

2. The power transmission unit according to claim 1, wherein the input shaft and the output shaft may be disposed coaxially.

3. The power transmission unit according to claim 1 or 2, further comprising a mechanism housing portion configured to house the transmission mechanism,
wherein the one-way clutch includes:
an inner ring;
an outer ring that surrounds the inner ring and is connected to the output shaft; and
an intermediate member that connects the inner ring to the outer ring in accordance with rotation of the inner ring in one direction to integrally rotate the inner ring and the outer ring and releases the connection between the inner ring and the outer ring in accordance with rotation of the outer ring in the other direction to rotate the outer ring and the inner ring relative to each other,
the input shaft is rotatably supported in the mechanism housing portion at a middle portion in the axial direction, and
the input shaft is connected to the drive shaft outside the mechanism housing portion, while being connected to the inner ring inside the mechanism housing portion.

4. The power transmission unit according to claim 3,
wherein the relay mechanism includes:
a first gear fixed to the outer ring; and
a second gear disposed between the first gear and the rotary shaft.

5. The power transmission unit according claim 4,
wherein the first gear is fixed to a first side in the axial direction with respect to the outer ring, and
the output shaft is fixed to a second side in the axial direction with respect to the outer ring.

6. The power transmission unit according to claim 1 or 2, further comprising a mechanism housing portion configured to house the transmission mechanism,
wherein the motor generator is disposed outward in the radial direction from the mechanism housing portion.

7. A power system comprising:
the power transmission unit according to claim 1 or 2;
the internal combustion engine including the drive shaft to which the input shaft is connected; and
the driven apparatus including a driven shaft to which the output shaft is connected.
